# EUROPÄISCHE PATENTANMELDUNG

(11) **EP 2 172 998 A1**
(43) Veröffentlichungstag der Anmeldung: **07.04.2010**
(21) Anmeldenummer: 09155539.1
(22) Anmeldetag: 18.03.2009
(51) Int. Cl.: H01M 4/88, H01M 4/86, H01M 4/92, H01M 8/10, H01M 4/90

(54) **Verfahren zur Herstellung von Kern-Schale-Katalysatoren**

(30) Priorität: 06.10.2008 DE 102008050577
(71) Anmelder: Ruhr-Universität Bochum, 44801 Bochum (DE)
(72) Erfinder: Schuhmann, Wolfgang, 44799 Bochum (DE); Bron, Michael, 44801 Bochum (DE); Kulp, Christian, 58575 Hemer (DE)
(74) Vertreter: Helbing, Jörg

(57) **Zusammenfassung**

Die Erfindung betrifft ein Verfahren zur Herstellung von Kern-Schale-Katalysatoren bestehend aus Träger-fixierten Kern-Schale-Partikeln, umfassend die elektrochemische induzierte Abscheidung des Hüllmaterials auf das auf dem leitfähigen Trägermaterial aufgebrachte Kernmaterial sowie eine mit diesem Material hergestellte Katalysatoren und Elektroden für elektrokatalytische Anwendungen.

## Beschreibung

Die Erfindung betrifft ein Verfahren zur Herstellung von Kern-Schale-Katalysatoren bestehend aus Träger-fixierten Kern-Schale-Partikeln, umfassend die elektrochemische induzierte Abscheidung des Hüllmaterials auf das auf dem leitfähigen Trägermaterial aufgebrachte Kernmaterial sowie mit diesem Material hergestellte Katalysatoren und Elektroden für elektrokatalytische Anwendungen.

### Technischer Hintergrund

Die Elektrokatalyse ist für diverse technische Verfahren, z. B. die Chlor-Alkali-Elektrolyse, die HCl-Elektrolyse und Brennstoffzellenkatalysatoren von immenser Bedeutung. Insbesondere gilt dies für die elektrokatalytische Sauerstoffreduktion, die als einer der wesentlichen limitierenden Schritte in Niedertemperatur-Brennstoffzellen mit Protonenaustauscher-Membran anzusehen ist. Gasteiger et al. fassen den Stand der Technik des Jahres 2003 in diesem Bereich zusammen (Gasteiger et al., Appl. Catal. B 56:9-35 (2005)). Demnach werden vor allem Ruß-geträgertes Platin (Pt/C) sowie Ruß-geträgerte Platin-Legierungen (PtM/C) für die elektrokatalytische Sauerstoffreduktion eingesetzt. Doch sowohl die elektrokatalytische Aktivität von Pt/C als auch die teilweise höheren Aktivitäten von PtM/C sind für die Anforderungen des automobilen Sektors in Hinblick auf eine Kommerzialisierung von Brennstoffzellen nicht ausreichend. Die hohen Kosten und die begrenzte Verfügbarkeit des Platins führen dazu, dass eine Reduktion der Platinmenge notwendig ist.

Ein Fazit des Übersichtsartikels von Gasteiger et al. ist, dass weiterhin ein Bedarf an der Entwicklung neuartiger, hochaktiver und im Vergleich zu Platin preiswerterer Katalysatoren besteht. In jüngerer Zeit werden als eine solche Alternative so genannte Kern-Schale-Katalysatoren diskutiert. Bei diesen befindet sich ein Kern aus einem meist unedlen, preiswerten Material, im Inneren einer Hülle aus Platin oder eines anderen aktiven Materials. Für einen effizienten Einsatz, z. B. in Brennstoffzellen, muss solche Kern-Schale-Katalysatoren ebenfalls auf ein leitfähiges Trägermaterial, im Allgemeinen einen Ruß, aufgebracht werden. Derartige Katalysatoren weisen eine hohe Aktivität bei einem geringeren Anteil des kostenintensiven Materials Pt auf. Über verschiedene Wege zur Herstellung von Kern-Schale-Katalysatoren wurde berichtet. Adzic und Mitarbeiter zeigen in einer Reihe von Arbeiten, wie es gelingt, eine Monolage von Platin durch Austauschreaktion auf einem Kern aus einem anderen Metall oder einer Legierung abzuscheiden. Hierbei wird zunächst durch Unterpotentialabscheidung eine Monolage Kupfer aufgebracht, die dann gegen Pt ausgetauscht wird (Zhang et al., J. Phys. Chem. B 108:10955-10964 (2004); Zhang et al., J. Phys. Chem. B 109:22701-22704 (2005)). Strasser und Mitarbeiter berichten über ein elektrochemisches Verfahren, bei dem durch elektrochemisches Herauslösen des unedleren Kupfers aus einer PtCu-Legierung ein Kern-Schale-Katalysator entsteht (Koh und Strasser, J. Am. Chem. Soc. 129:12624-12625 (2007), Liu et al., J. Electrochem. Soc. 154:B1192-B1199 (2007)). Weitere nasschemische Verfahren beinhalten das sog. seed-growth-Verfahren (Zhou et al., Angew. Chem. Int. Ed. 44:4539-4543(2005)) oder die reduktive Abscheidung einer Platinhülle mittels Ascorbinsäure (Giorgio und Henry, Eur. Phys. J. Appl. Phys. 20:23 (2002)). Alle diese Verfahren weisen mehr oder weniger starke Nachteile auf. Das Verfahren von Adzic und Mitarbeitern ist sehr aufwändig, da der Schalenaufbau in vielen einzelnen Schritten erfolgt. Austauschreaktionen führen zudem häufig zu dendritischem Wachstum, die Bildung einer Pt-Schale ist nicht gewährleistet. Im Verfahren von Strasser stellt sich die Schichtdicke der Pt-Schale und damit die katalytische Schicht systembedingt ein und kann nicht variiert werden. Zudem kann weiteres Auswaschen während der Anwendung nicht ausgeschlossen werden. Zusätzlich beinhalten einige Verfahren Schritte, bei denen das katalytische Material nachträglich auf einen Kohlenstoff aufgebracht werden muss. Dieser Schritt der Aufbringung ist im Allgemeinen unselektiv, d. h. die Abscheidung erfolgt auch an Stellen, die elektrisch nicht kontaktiert sind.

Gasteiger et al., Appl. Catal. B 56:9-35 (2005) beschreiben in ihrem Übersichtsartikel Ausnutzungsgrade (d. h. den Anteil an Katalysator, der tatsächlich an der elektrochemischen Reaktion teilnimmt) von 60 bis 98 %. Dieser Ausnutzungsgrad ist ein Kriterium der Wirtschaftlichkeit und Effizienz des Katalysators. Er wird jedoch auf die exponierte Katalysatoroberfläche unter Vernachlässigung des Volumenmaterials bezogen. Eine elektrochemische Abscheidung ermöglicht dagegen einen späteren Ausnutzungsgrad von nahezu 100 %, darüber hinaus ist der volumenbezogene Katalysatornutzungsgrad bei den vorgeschlagenen Kern-Schale-Katalysatoren weit höher als der von reinen Pt-Nanopartikeln. Weiterhin kann die Dicke der Schale von den bisher zur Verfügung stehenden Verfahren nur unzureichend kontrolliert werden. Üblicherweise können entweder nur Monolagen an Hüllmaterial eingestellt werden, oder aber die Beschichtungsstärke wird nachgeschaltet in einem elektrochemischen oder chemischen Laugungs-Schritt - mit geringer Kontrolle - eingestellt.

Es bestand somit weiterhin ein Bedürfnis, auf einem leitfähigen Trägermaterial elektrisch angebundene Kern-Schale-Katalysatoren mit variabler, einstellbarer Schichtdicke und sehr hohem Ausnutzungsgrad herzustellen.

### Kurzbeschreibung der Erfindung

Es wurde nunmehr gefunden, dass durch ein Verfahren, bei dem elektrochemisch die Schale eines Metalls, bevorzugt eines Edelmetalls wie Platin, auf den auf ein leitfähiges Trägermaterial aufgebrachten Kern eines anderen Metalls abgeschieden wird, Kern-Schale-Katalysatoren mit variabler Schichtdicke und gleichzeitigem hohen Ausnutzungsgrad herstellbar sind. In dem Verfahren kann die Schichtdicke kontrolliert zwischen 1 Monolage Aktivmetall und einer quasi unendlich Dicken Schicht - bei gleichzeitigem hohen Ausnutzungsgrad eingestellt werden. Die Erfindung betrifft somit
(1) ein Verfahren zur Herstellung eines auf einem leitfähigen Trägermaterial fixierten Kern-Schale-Katalysators, umfassend die elektrochemisch induzierte Abscheidung des Hüllmaterials auf das auf dem leitfähigen Trägermaterial aufgebrachte Kernmaterial;
(2) einen Kern-Schale-Katalysator, der auf einem leitfähigen Trägermaterial fixiert und durch elektrochemisch induzierte Abscheidung des Hüllmaterials auf das auf dem leitfähigen Trägermaterial aufgebrachte Kernmaterial nach dem Verfahren von (1) erhältlich ist, wobei das Hüllmaterial eine Schichtdicke von einer Monolage des Hüllmaterials bis zu 2 nm, vorzugsweise 2 bis 3 Monolagen aufweist;
(3) eine Elektrode, umfassend einen Kern-Schale-Katalysator nach (2);
(4) ein Verfahren zur Herstellung einer Elektrode mit einem Kern-Schale-Katalysator, insbesondere einer Elektrode nach (3), umfassend das Abscheiden des Hüllenmaterials durch direkte elektrochemisch induzierte Abscheidung auf das auf der Basiselektrode fixierte Kernmaterial in einem Verfahren nach (1); und
(5) die Verwendung des Kern-Schale-Katalysators nach (2) und/oder der Elektrode nach (3) und/oder der nach dem Verfahren von (4) erhältlichen Elektroden für elektrokatalytische Anwendungen.

### Kurzbeschreibung der Figuren

Figur 1: Zyklovoltammogramme zur Verdeutlichung der sukzessiven Schalenbildung um Ruß-geträgerte Goldkerne durch elektrochemische Pulsabscheidung.
Figur 2: Zyklovoltammogramme zur Verdeutlichung der sukzessiven Schalenbildung um Ruthenium-Kerne durch elektrochemische Pulsabscheidung.
Figur 3: Zyklovoltammogramme zur Verdeutlichung der sukzessiven Schalenbildung um Ruß-geträgerte Goldkerne durch elektrochemische Pulsabscheidung (im Vergleich zu Figur 1 geänderte Abscheidebedingungen).
Figur 4: Aufnahme zur Visualisierung der Selektivität der erfindungsgemäßen Abscheidung mittels elektrochemischer Rastermikroskopie.
Figur 5: Untersuchung der Sauerstoffreduktionsaktivität von erfindungsgemäßen Kern-Schale-Katalysatoren mittels der rotierenden Scheibenelektrode.

### Detaillierte Beschreibung der Erfindung

In dem Verfahren gemäß Aspekt (1) der Erfindung besteht das Kernmaterial vorzugsweise aus einem Metall, wobei ein Metall der ersten Übergangsreihe (z. B. leichtere Übergangsmetalle wie Fe, Co, Ni und Cu) oder Legierungen von zwei oder mehreren solcher Metalle bevorzugt ist.

Die leitfähigen Trägermaterialien umfassen neben leitfähigen Oxiden mit hoher spezifischer Oberfläche bevorzugt verschiedene Formen von Kohlenstoffen mit hoher spezifischer Oberfläche, insbesondere Graphit, Kohlenstoffnanoröhren und andere fein verteilte Trägermaterialien, wobei Ruß besonders bevorzugt ist.

Das Aufbringen des Kernmaterials auf dem leitenden Trägermaterial kann erfindungsgemäß durch nasse und trockene Imprägnierungsverfahren, Fällungsreaktionen, chemische Gasphasenabscheidung (CVD), physikalische Gasphasenabscheidung (PVD), Sputter-Verfahren oder kolloidale Synthesen oder durch elektrochemische Abscheidung erfolgen. Dabei ist es bevorzugt, dass die auf dem Trägermaterial fixierten Kerne eine Größe von 0,5 bis 100 nm, bevorzugt von 2 bis 20 nm, besonders bevorzugt von 2 bis 10 nm aufweisen.

Beispiele besonders bevorzugter Schalenmetalle sind katalytisch aktive Edelmetalle, wobei Platin besonders bevorzugt ist.

In dem Verfahren gemäß Aspekt (1) und (4) der Erfindung erfolgt die elektrochemische Abscheidung durch Pulsabscheidung, besonders bevorzugt durch Abscheidung mittels sehr kurzer Pulse (< 3 s, vorzugsweise < 1 s) aus einer das Aktivmetall als Salz enthaltenden Lösung, bevorzugt einer wässrigen Lösung, besonders bevorzugt einer wässrigen Lösung bei pH 7. Hierbei erfolgt das Abscheiden durch ein zyklisches Verfahren umfassend das Anlegen eines Basispotentials von 300 bis 1700 mV vs. RHE (reversible Wasserstoffelektrode) (bevorzugt etwa 1000 mV), anschließend Anlegen eines Pulspotentiales von 250 mV bis -1500 mV mV (bevorzugt etwa -300 mV) für bevorzugt 10 ms bis 3 s (besonders bevorzugt etwa 100 ms) und der Rückkehr auf das Basispotential.

Durch Einstellen der Zyklenzahl kann dabei die Schichtdicke des Hüllenmaterials frei gewählt werden, wobei das Verfahren vorzugsweise so geführt wird, dass das Hüllmaterial eine Schichtdicke von einer Monolage bis zu 2 nm, besonders bevorzugt von 2 bis 3 Monolagen aufweist.

Mit dem erfindungsgemäßen Verfahren wird auch gewährleistet, dass die Abscheidung des Hüllmaterials selektiv auf dem Kernmaterial erfolgt und dass das Kernmaterial vollständig umhüllt, wobei ein Ausnutzungsgrad von größer 80%, insbesondere größer 90%, besonders bevorzugt größer als 95% und ganz besonders bevorzugt von größer 99% gewährleistet wird. Der "Ausnutzungsgrad beschreibt dabei den Anteil an Katalysator, der tatsächlich an der elektrochemischen Reaktion teilnimmt.

In dem Kern-Schale-Katalysator gemäß Aspekt 2 und der Elektrode gemäß Aspekt (3) weist das Hüllmaterial eine Schichtdicke von einer Monolage des Hüllmaterials bis zu 2 nm, vorzugsweise von 2 bis 3 Monolagen auf. Zusätzlich, bedingt durch das Herstellungsverfahren weisen der Katalysator bzw. die Elektrode den vorstehend genannten hohen Ausnutzungsgrad auf.

Die Elektrode gemäß Aspekt (2) der Erfindung umfasst auch eine flächige, poröse Elektrode (Gas-Diffusions-Elektrode), die mit dem erfindungsgemäßen Material hergestellt wurde. Die Herstellung kann dabei bevorzugt durch Verfahren wie z. B. Sprühen, Aufstreichen von Suspensionen des erfindungsgemäßen Materials, mit oder ohne Zusatz von Hilfsstoffen wie z. B. Nafion oder Teflon, erfolgen.

In seiner Ausführungsform als Brennstoffzellen-Elektrode handelt es sich bei dem Trägermaterial bevorzugt um eine Gas-Diffusionelektrode, bei der eine Katalysatorschicht auf ein Kohlenstoffgewebe aufgebracht ist.

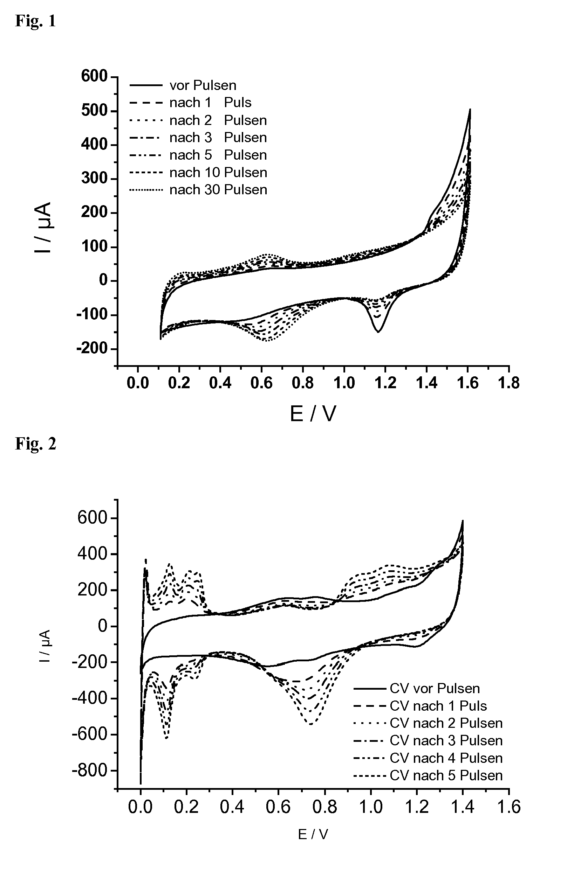

Die Erfindung wird durch die Figuren 1 bis 5 und anhand der nachfolgenden Beispiele, welche jedoch keine Beschränkung der Erfindung darstellen, näher erläutert.

### Beispiele

### Beispiel 1: Herstellung des erfindungsgemäßen Materials

Die erfolgreiche Darstellung des erfindungsgemäßen Materials gemäß der Aufgabe, d. h. die elektrochemische Abscheidung einer Platinschale um auf ein leitfähiges Substrat aufgebrachte Metallkerne wurde an zwei Beispielen demonstriert. Es wurde mittels gepulstem Potentialprofil Pt auf Gold/Kohlenstoff-(Au/C-) und Ruthenium-Kohlenstoff- (Ru/C)-Katalysatoren abgeschieden. Der Au/C-Katalysator wurden durch kolloidale Synthese nach (K. C. Grabar et al., Langmuir 12 (1996) 2353) hergestellt, der Ru/C-Katalysator war eine kommerzielle Probe der Firma STREM. Der Kohlenstoff war jeweils ein leitfähiger Ruß. Der jeweilige Katalysator wurde als dünner Film auf eine zylindrische, Teflon-ummantelte Glaskohlenstoffelektrode (Durchmesser 5 mm) aufgebracht. Das Verfahren zur Aufbringung ist in T. J. Schmidt et al., J. Electrochem. Soc. 145 (1998) 2354 beschrieben. Das Potentialprofil zur Umhüllung des Au- bzw-Ru-Kerns bestand aus dem Anlegen eines Basispotentials von 1000 mV vs. RHE, anschließend eines Pulspotentiales von 300 mV für 100 ms und der Rückkehr auf das Basispotential von 1000 mV. Die zur Abscheidung verwendete Lösung enthielt 0.1 mmol/l Pt(NO₃)₂ und 1 mmol/l NaNO₃.

Figur 1 zeigt zyklische Voltammogramme, die nach der sukzessiven Deposition von Platin auf einen Au/C-Katalysator aufgenommen werden. Während die typischen Redox-Eigenschaften des Goldes im zyklischen Voltammogramm mit der Anzahl der elektrochemischen Pulszyklen verschwinden, entstehen mit steigender Pulszahl die Redox-Eigenschaften des Pt. Dies belegt, dass die Goldpartikel nach und nach vollständig durch eine Pt-Hülle umgeben werden. Analog zeigen die in Figur 2 dargestellten zyklischen Voltammogramme dies für den Ru/C-Katalysator.

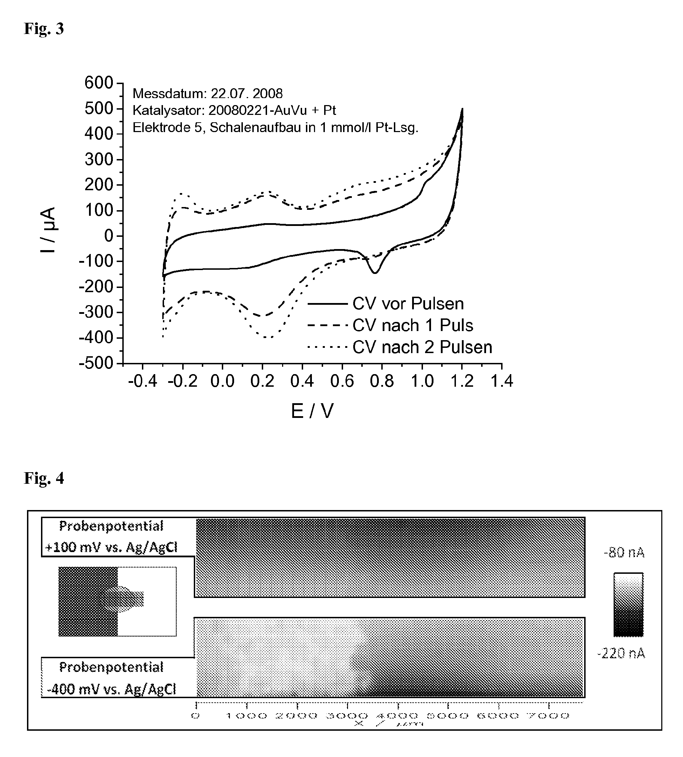

In Figur 3 ist dargestellt, wie durch geeignete Wahl der Abscheideparamter die Bildung der Schale beeinflusst werden kann. Für die Zyklovoltammogramme in Figur 3 wurde die Elektrodeposition aus einer Lösung durchgeführt, die eine erhöhte Lösungskonzentration von 1 mmol/l Pt(NO₃)₂ und 10 mmol/l NaNO₃. besaß. Deutlich ist zu erkennen, dass die Goldpartikel schon nach einem Abscheidepuls vollständig von Platin umgeben sind.

### Beispiel 2: Selektivität der Abscheidung

Die elektrochemische Abscheidung einer Schale um einen auf einem leitfähigen Trägermaterial geträgerten Kern kann selektiv oder unselektiv erfolgen. Ein Glaskohlenstoff-Chip wurde zur Hälfte mit dem Au/C-Katalysator belegt. An der Grenze zwischen belegter und unbelegter Fläche des Glaskohlenstoff-Chips wurde eine Tropfenzelle aufgebracht und erfindungsgemäß Pt elektrochemisch Abgeschieden. Figur 4 zeigt eine Aufnahme dieses Grenzbereiches im elektrochemischen Rastermikroskop. Helle Bereiche belegen eine lokal hohe Sauerstoffreduktions-Aktivität der Probe, dunkle Bereiche eine geringe. Bei Potentialen, bei denen elektrokatalytische Sauerstoffreduktion an Platin stattfindet, ist nur über dem vorher Au/C-belegten Bereich des GC-Chips Sauerstoffreduktionsaktivität zu beobachten, was belegt, das die Abscheidung von Platin selektiv auf dem Au/C-Katalysator erfolgte.

### Beispiel 3: Charakterisierung des erfindungsgemäßen Materials

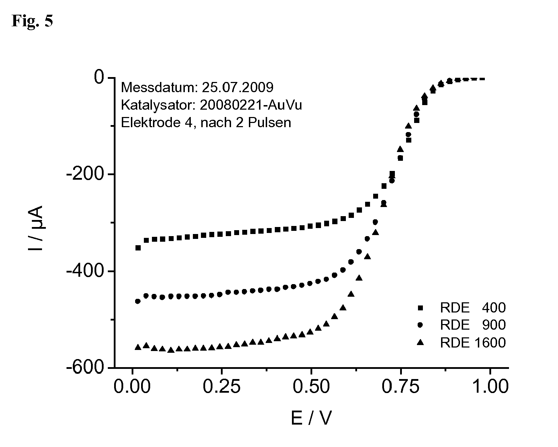

Die auf diese Weise hergestellten Ruß-geträgerten Gold-Platin-Kern-Schale-Katalysatoren sind aktiv für elektrokatalytische Reaktionen. Figur 5 zeigt Messungen mit der rotierenden Scheiben-Elektrode, wie sie mit einem PtAu/C-Kern-Schale-Katalysator aufgenommen wurden. Als Elektrolyt-Lösung diente 0.5 M Schwefelsäure. Es ist deutlich der von der Umdrehungsgeschwindigkeit der Elektrode abhängende Reduktionsstrom bei Potentialen unterhalb von 0.9 V vs. RHE zu sehen, der die katalytische Aktivität des erfindungsgemäßen Materials für die elektrokatalytische Sauerstoffreduktion belegt.

## Patentansprüche

1. Verfahren zur Herstellung eines auf einem leitfähigen Trägermaterial fixierten Kern-Schale-Katalysators, umfassend die elektrochemisch induzierte Abscheidung des Hüllmaterials auf das auf dem leitfähigen Trägermaterial aufgebrachte Kernmaterial.

2. Verfahren nach Anspruch 1, wobei
(i) das Kernmaterial aus einem Metall, bevorzugt einem Metall der ersten Übergangsreihe, oder aus Legierungen von zwei oder mehreren Metallen besteht; und/oder
(ii) das leitfähige Trägermaterial leitfähige Oxide oder bevorzugt verschiedene Formen von Kohlenstoffen mit hoher spezifischer Oberfläche, insbesondere Graphit, Kohlenstoffnanoröhren und andere fein verteilte Trägermaterialien umfasst, und besonders bevorzugt Ruß ist.

3. Verfahren nach Anspruch 1 oder 2, wobei das Aufbringen des Kernmaterials auf dem leitenden Trägermaterial
(i) durch CVD, PVD, Sputterverfahren, nasse oder trockene Imprägnierungsverfahren, Fällungsreaktionen, oder kolloidale Synthesen oder
(ii) durch elektrochemische Abscheidung
erfolgt.

4. Verfahren nach einem oder mehreren der Ansprüche 1 bis 3, wobei die auf dem Trägermaterial fixierten Kerne eine Größe von 0,5 bis 100 nm, bevorzugt von 2 bis 20 nm, besonders bevorzugt von 2 bis 10 nm aufweisen.

5. Verfahren nach einem oder mehreren der Ansprüche 1 bis 4, wobei die Abscheidung des Hüllmaterials selektiv auf dem Kernmaterial erfolgt und das Kernmaterial vollständig umhüllt, wobei ein Ausnutzungsgrad von größer 80%, insbesondere größer 95%, besonders bevorzugt größer 99 % ist.

6. Verfahren nach einem oder mehreren der Ansprüche 1 bis 5, wobei das Hüllmaterial ein katalytisch aktives Metall, bevorzugt ein katalytisch aktives Edelmetall, besonders bevorzugt Platin ist.

7. Verfahren nach einem oder mehreren der Ansprüche 1 bis 6, wobei die elektrochemisch induzierte Abscheidung des Hüllmaterials durch Pulsabscheidung, insbesondere mit sehr kurzen Pulsen von kürzer als 3 s, besonders bevorzugt kürzer als 1 s, erfolgt.

8. Verfahren nach Anspruch 7, wobei das Abscheiden durch ein (zyklisches ?) Verfahren umfassend Anlegen eines Basispotentials von 300 bis 1700 mV vs. RHE (bevorzugt etwa 1000 mV), anschließend Anlegen eines Pulspotentiales von 250 bis -1500 mV (besonders bevorzugt etwa -300 mV) für 10 ms bis 3 s (bevorzugt etwa 100 ms) und der Rückkehr auf das Basispotential erfolgt.

9. Verfahren nach einem oder mehreren der Ansprüche 1 bis 8, wobei das Hüllmaterial eine Schichtdicke von einer Monolage des Hüllmaterials bis zu 2 nm, vorzugsweise von 2 bis 3 Monolagen des Hüllmaterials aufweist.

10. Kern-Schale-Katalysator, der auf einem leitfähigen Trägermaterial fixiert und durch elektrochemisch induzierte Abscheidung des Hüllmaterials auf das auf dem leitfähigen Trägermaterial aufgebrachte Kernmaterial nach einem Verfahren gemäß einem oder mehreren der Ansprüchen 1 bis 9 erhältlich ist, wobei das Hüllmaterial eine Schichtdicke von einer Monolage des Hüllmaterials bis zu 2 nm, vorzugsweise von 2 bis 3 Monolagen aufweist.

11. Elektrode umfassend einen Kern-Schale-Katalysator nach Anspruch 10.

12. Elektrode nach Anspruch 11, wobei
(i) der Kern-Schale-Katalysator eine poröse Struktur aufweist; und/oder
(ii) die Elektrode eine Gasdiffusionselektrode, vorzugsweise eine Gasdiffusionselektrode für Brennstoffzellenanwendungen ist.

13. Verfahren zur Herstellung einer Elektrode mit einem Kern-Schale-Katalysator, insbesondere einer Elektrode nach Anspruch 11 oder 12, umfassend das Abscheiden des Hüllenmaterials durch direkte elektrochemisch induzierte Abscheidung auf das auf der Basiselektrode fixierte Kernmaterial in einem Verfahren nach einem oder mehreren der Ansprüche 1 bis 9.

14. Verfahren nach Anspruch 13, weiterhin umfassend das elektrochemische Abscheiden des Kernmaterials des Kern-Schale-Katalysators direkt auf der Basiselektrode.

15. Verwendung des Kern-Schale-Katalysators nach Anspruch 10 und/oder der Elektrode nach Anspruch 11 oder 12 und/oder der nach dem Verfahren von Ansprüchen 13 oder 14 erhältlichen Elektroden für elektrokatalytische Anwendungen oder in der heterogenen Katalyse.
